# EUROPÄISCHE PATENTANMELDUNG

(11) **EP 4 382 825 A1**
(43) Veröffentlichungstag der Anmeldung: **12.06.2024**
(21) Anmeldenummer: 22211838.2
(22) Anmeldetag: 06.12.2022
(51) Int. Cl.: F24S 25/16, F24S 25/15, H02S 20/00, F24S 25/63

(54) **STÜTZELEMENT AUS METALL FÜR MINDESTENS EIN SOLARELEMENT UND SOLARANLAGE MIT DIESEM STÜTZELEMENT**

(71) Anmelder: voestalpine Metal Forming GmbH, 3500 Krems an der Donau (AT)
(72) Erfinder: GERSTNER, Florian, 73432 Aalen (DE); WIEMANN, Marcus, 49324 Melle (DE); KRESIC, Kresimir, 73574 Iggingen (DE)
(74) Vertreter: Jell, Friedrich

(57) **Zusammenfassung**

Es wird eine Solaranlage (1) und hierfür ein Stützelement (4) aus Metall für mindestens ein Solarelement (2, 3), insbesondere Solarmodul und/oder Solarkollektor, gezeigt. Um hohe Standfestigkeit bei konstruktiver Einfachheit am Stützelement (4) zu ermöglichen, wird vorgeschlagen, dass das Stützelement (4) aus einem Blechprofil, insbesondere Stahlblechprofil, besteht, dessen Profilboden den Fuß (5) und dessen Profilschenkel den Steg (7, 8) ausbildet, welcher Steg (7, 8) an seinem freien, dem Fuß (5) gegenüberliegenden Ende (9) mindestens eine Aufnahme (10a, 10b, 10c, 10d) durch eine in das Blech eingebrachte Aussparung aufweist, wobei diese Aufnahme (10a, 10b, 10c, 10d) zur Aufnahme eines Rahmenschenkels (12a, 12b) des Solarelements (2, 3) ausgeformt ist.

## Beschreibung

Die Erfindung betrifft ein Stützelement aus Metall für mindestens ein Solarelement, insbesondere Solarmodul und/oder Solarkollektor, mit einer, eine Aufstandsfläche für das Stützelement ausbildenden Fuß, mit zumindest einem vom Fuß in der Höhe des Stützelements vorspringenden Steg zum Abstützen des am Stützelement lastenden Solarelements.

Um Solarelemente vor einem Durchbiegen zu schützen, sind Stützelemente aus Metall bekannt, die beispielsweise in der Mitte des Solarelements angeordnet dessen Rahmen abstützen können. So ist etwa aus der US 2018/0026576 A1 ein extrudiertes Stützelement aus Aluminium bekannt, das einen eine Aufstandsfläche für das Stützelement ausbildenden Fuß und einen vom Fuß in der Höhe des Stützelements vorspringenden Steg aufweist, auf dem das Solarelement lastet. Mit einem Klemmteil des Stützelements wird das Solarelement am Steg niedergehalten. Das Stützelement ist somit vergleichsweise komplex aufgebaut und folglich kostenintensiv in der Herstellung - des Weiteren bedarf es aufgrund seiner Mehrteiligkeit auch eines vergleichsweise hohen Montageaufwands.

Die Erfindung hat sich daher die Aufgabe gestellt, ein Stützelement der eingangs geschilderten Art konstruktiv derart zu verändern, dass es einfach handhabbar und dennoch kostengünstig herstellbar ist - und zwar ohne dabei jedoch mit einer verminderten Standfestigkeit bei Abstützung des auf ihm lastenden Solarelements rechnen zu müssen.

Die Erfindung löst die gestellte Aufgabe durch die Merkmale des Anspruchs 1.

Besteht das Stützelement aus einem Blechprofil, dessen Profilboden den Fuß und dessen Profilschenkel den Steg ausbildet, kann im Vergleich mit einem Stranggussprofil die Konstruktion des Stützelements erheblich vereinfacht werden. Dies umso mehr, wenn der Steg an seinem freien, dem Fuß gegenüberliegenden Ende mindestens eine Aufnahme durch eine in das Blech eingebrachte Aussparung ausbildet, wobei diese Aufnahme zur Aufnahme eines Rahmenschenkels des ersten Solarelements ausgeformt ist. Im Gegensatz zum Stand der Technik sind sohin bei der Befestigung des Solarelements keine weiteren Teile am Stützelement erforderlich - was die Montage des Solarelements, beispielsweise auf einem Dach, erheblich erleichtert. Hinzu kommt, dass sich die Aufnahme für das Solarelement vergleichsweise reproduzierbar in das Blech des Stegs einbringen lässt. Beispielsweise ist es möglich, diese Aussparung noch vor dem Blechumformen des Blechs zum Blechprofil in das Blech einzuschneiden, beispielsweise einzustanzen, was zu einem standfesten und vergleichsweise kostengünstig herstellbaren Stützelement führt.

Das erfindungsgemäße Stützelement ist daher nicht nur vergleichsweise einfach handhabbar, sondern kann sich auch durch eine kostengünstige Herstellung und Standfestigkeit auszeichnen. Dies beispielsweise, wenn das Blechprofil ein Stahlblechprofil ist.

Die Konstruktion des Stützelements kann weiter vereinfacht werden, wenn ein Blechabschnitt des Stegs von einem Blechrand am freien Ende des Stegs vorspringt und gemeinsam mit diesem Blechrand die Aufnahme ausbildet. Zudem erleichtert der Blechabschnitt durch seine vorspringende Ausführung das Vorsehen des Stützelements in der Ausnehmung. Die Montage des Solarelements ist daher besonders handhabungsfreundlich.

Um das Stützelement konstruktiv weiter zu vereinfachen, ist der Blechabschnitt beispielsweise L-förmige ausgebildet.

Das Solarelement kann in der Aufnahme gegenüber einem Abziehen gesichert werden, indem der Blechrand innerhalb der Aufnahme zumindest eine erste vorspringende Zacke ausformt.

Weisen zwei erste Zacken voneinander unterschiedliche Zackenhöhen auf, können damit Solarelemente mit verschiedensten Abmessungen in der Aufnahme gesichert werden. Entsprechend der Dicke des Rahmenschenkels des Solarelements greifen entweder beide Zacken oder zumindest eine dieser Zacken an dem Rahmenschenkel an, und sichert damit das Solarelement am Stützelement. Vorstellbar hierbei ist, dass sich zumindest eine Zacke in den Rahmenschenkel eindrückt.

Alternativ oder zusätzlich kann jene einer Aufnahmeöffnung der Aufnahme am nächsten liegende erste Zacke in der Zackenhöhe kleiner als die ihr nachfolgende erste Zacke sein. Auf diese Weise kann nämlich diese weitere erste Zacke den Rahmenschenkel unabhängiger von der Wanddicke in der Aufnahme standfest festkrallen. Die Standfestigkeit des Stützelements ist damit weiter erhöhbar.

Vorzugsweise bildet der vorspringende Blechabschnitt an seinem Kopfende eine zweite Zacke aus, um damit den Rahmenschenkel auf beiden gegenüberliegenden Flachseiten standfester in der Aufnahme durch Verkrallen sichern zu können.

Sind die erste und zweite Zacke zum Verklemmen des von der Aufnahme aufgenommenen Rahmenschenkels des Solarelements ausgebildet, kann der Rahmenschenkel verbessert standfester in der Aufnahme gehalten werden.

Beispielsweise verläuft der im Wesentlichen quer zur Längsrichtung des Stegs verlaufende Blechrand in der und/oder in die Aufnahme mit einem Neigungswinkel. Dies kann unter anderem für eine korrekte Ausrichtung des aufgenommenen Solarelements sorgen, was die Montage des Solarelements weiter erleichtern kann. Diesbezüglich kann sich ein Neigungswinkel im Bereich von 5 bis 15 Grad auszeichnen. Vorzugsweise beträgt der Neigungswinkel 10 Grad.

Vorzugsweise weist der Blechabschnitt jeweils einen ersten in Längsrichtung des betreffenden Stegs verlaufenden Teilabschnitt und einen daran anschließenden zweiten Teilabschnitt auf, der einen zum Blechrand hin geneigten Verlauf aufweist.

Die Konstruktion des Stützelements im Bereich der Aufnahme ist weiter vereinfachbar, wenn der erste und/oder zweite Teilabschnitt im Wesentlichen gerade verlaufen.

Erweitern sich die Aufnahmen jeweils von ihrer Aufnahmeöffnung zu ihrem Aufnahmeanschlag in der Aufnahmeweite zumindest abschnittsweise, insbesondere kontinuierlich, kann dies das Vorsehen des Rahmenschenkels in der Aufnahme weiter erleichtern.

Die Herstellung des Stützelements ist weiter vereinfachbar, wenn das Stützelement aus einem U-förmigen Blechprofil besteht. Zudem kann sich mit dieser Profilform die Befestigung des Solarelements am Stützelement weiter verbessern, wenn dessen zwei Profilschenkel den ersten Steg mit der ersten Aufnahme und den zweiten Steg mit einer zweiten Aufnahme ausbilden, die beide in die gleiche Richtung zur Aufnahme des Rahmenschenkels des ersten Solarelements ausgerichtet sind. Damit kann sich unter anderem die mechanische Belastung in der Abstützung des Solarelements auf zwei Aufnahmen aufteilen - was die Standfestigkeit des Stützelements weiter erhöhen kann.

Zudem kann ein Stützelement auch zur Abstützung von zwei Solarelementen ausgebildet sein. Beispielsweise, indem der erste Steg eine dritte Aufnahme und der zweite Steg eine vierte Aufnahme ausbilden, die der an dem jeweiligen Steg angeordneten anderen Aufnahme in entgegengesetzter Richtung ausgerichtet und zur Aufnahme des Rahmenschenkels eines anderen zweiten Solarelements ausgebildet sind. Ein vielseitig verwendbares Stützelement kann damit geschaffen werden.

Indem die Aufnahmen vom Fuß aus gesehen auf gleicher Höhe zueinander angeordnet sind, ist es möglich, die Handhabung beim Vorsehen des Rahmenschenkels in die betreffenden Aufnahmen weiter zu verbessern. Das Stützelement kann damit die Montage des Solarelements erleichtern.

Indem eine an den freien Enden der beiden Stege jeweils mittig vorgesehene, im Querschnitt umgekehrt T-förmige Aussparung die Aufnahmen des betreffenden Stegs ausbildet, ist die Herstellung des Stützelements besonders zu erleichtern - was auch zu einem vergleichsweise kostengünstigen und robusten Stützelement führen.

Das erfindungsgemäße Stützelement kann sich insbesondere für eine Anordnung mit zumindest einem Solarelement, insbesondere Solarmodul und/oder Solarkollektor, das einen Rahmen mit einem Rahmenschenkel aufweist, auszeichnen. Hierzu ragt der Rahmenschenkel in zumindest eine Aufnahme des Stützelements. Beispielsweise kann das Stützelement insbesondere mittig des Rahmens angeordnet sein, um als Mittelstütze - beispielsweise hohe Schneelasten - am Solarelement standfest abtragen zu können.

Das erfindungsgemäße Stützelement oder die Anordnung mit dem Stützelement kann sich insbesondere für eine Solaranlage eignen.

In den Figuren ist beispielsweise der Erfindungsgegenstand anhand einer Ausführungsvariante näher dargestellt. Es zeigen
- Fig. 1: eine Seitenansicht auf eine Solaranlage mit zwei Solarelementen, lastend auf einem Stützelement,
- Fig. 2: eine verkleinerte Darstellung des nach Fig. 1 dargestellten Stützelements,
- Fig. 3: eine Frontansicht auf das nach Fig. 2 dargestellte Stützelement,
- Fig. 4: eine vergrößerte Darstellung auf eine Aufnahme des nach Fig. 2 dargestellten Stützelements,
- Fig. 4a: eine vergrößerte Ansicht auf Zacken der Aufnahme nach Fig. 4 und
- Fig. 5: eine perspektivische teilweise aufgerissene schematische Ansicht auf die Solaranlage nach Fig. 1.

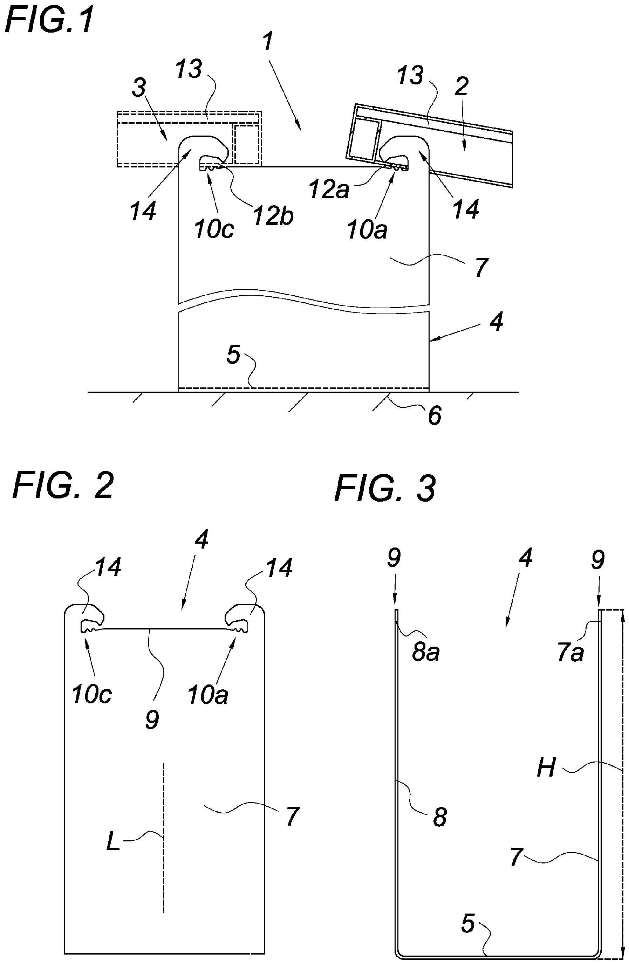

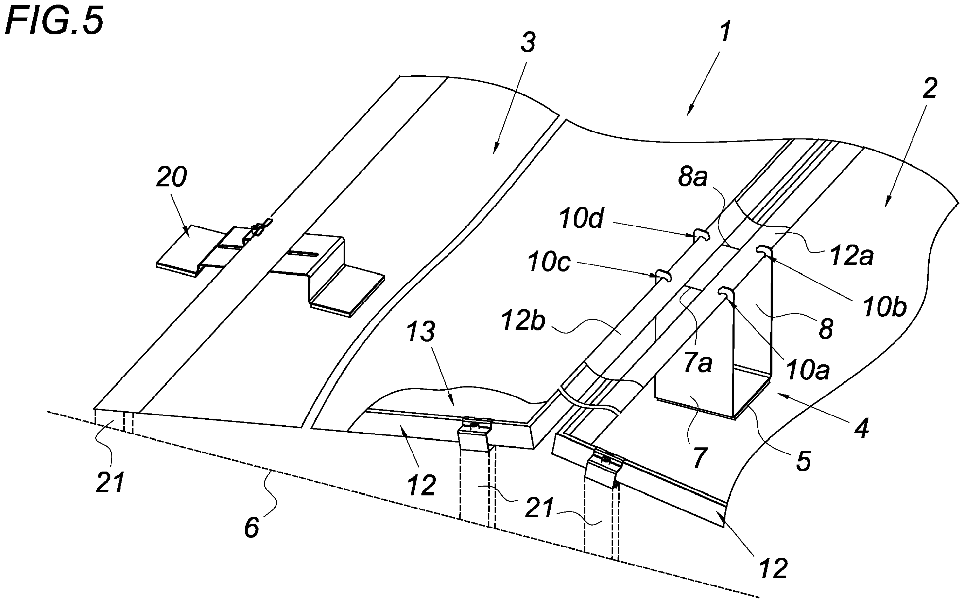

Nach den Figuren 1 und 5 ist eine Solaranlage 1 mit zumindest zwei je als Solarmodul, nämlich PV-Modul, ausgebildete ersten und zweiten Solarelementen 2, 3 und mit einem Stützelement 4 dargestellt. Die Solarelemente 2, 3 weisen einen Rahmen auf und werden oftmals auch als gerahmte Solarelemente 2, 3 bezeichnet. Diesen und ganz besonders bei gerahmten Solarmodulen ist gemeinsam, dass dem Rahmen 12 auf der Unterseite des Solarelements 2, 3 ein Rahmenschenkel 12a frei auskragt, und zwar seitlich nach innen gerichtet. Damit kann das Solarelements 2 verdeckt montiert werden. Als Rahmen 12 werden bei Solarelementen 2, 3 meist Aluminiumprofil-Rahmen verwendet.

Das aus Metall bestehende Stützelement 4 weist einen Fuß 5 auf, der eine Aufstandsfläche für das Stützelement 4 auf einem Untergrund 6 ausbildet. Zudem weist das Stützelement 4 einen vom Fuß 5 in der Höhe H des Stützelements 4 vorspringenden ersten Steg 7 auf, der das erste und zweite Solarelement 2 und 3 abstützt.

Erfindungsgemäß besteht das Stützelement 4 aus einem Blechprofil, nämlich Stahlblechprofil, was dieses vergleichsweise robust und damit standfest gegenüber jegliche Belastungen wie Windlasten, Schneelasten, Umwelteinflüssen etc. macht. Vorteilhaft bildet dessen Profilboden den Fuß 5 und dessen Profilschenkel den ersten Steg 7 aus. Der erste Steg 7 weist auf seinem freien Ende 9, das dem Fuß 5 gegenüberliegt, eine erste Aufnahme 10a auf. Diese erste Aufnahme 10a wird durch eine in das Blech eingebrachte Aussparung ausgebildet. Beispielsweise ist diese erste Aufnahme 10a in das Blech des Blechprofils eingeschnitten, beispielsweise eingestanzt, mit Laser eingeschnitten, etc..

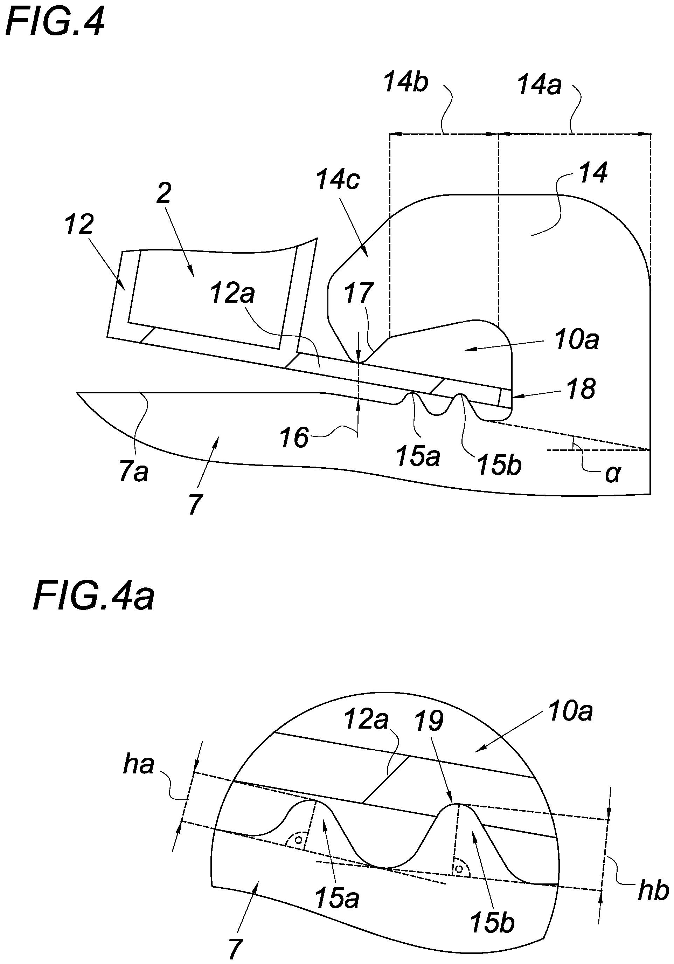

Wie zudem in Fig. 1 und Fig. 4 zu erkennen, ist die erste Aufnahme 10a derart ausgeformt, dass diese den Rahmenschenkel 12a des Solarzellen 13 einfassenden Rahmens 12 des Solarelements 2 aufnehmen kann. Aufgrund der Ausbildung des Stützelements 4 als Blechprofil ist diese erste Aufnahme 10a vergleichsweise robust gegenüber Verformungen und kann damit das aufgenommene Solarelement 2 standfest auch bei hohen Auflasten tragen.

Wie in der Fig. 4 vergrößert dargestellt zu erkennen, springt ein L-förmiger Blechabschnitt 14 des ersten Stegs 7 von einem Blechrand 7a am freien Ende 9 des Stegs 7 vor. Der L-förmige Blechabschnitt 14 und der Blechrand 7a bildet zusammen die Aufnahme 10a zwischen einander aus.

Zudem weist der Blechrand 7a innerhalb der Aufnahme 10a zwei erste vorspringende Zacken 15a, 15b auf. Diese ersten Zacken 15a, 15b haben eine zueinander unterschiedliche Zackenhöhe ha, hb, wobei jene erste Zacke 15a, die der Aufnahmeöffnung 16 am nächsten liegt, in der Zackenhöhe ha kleiner ist, als die zweite Zacke 15b.

Zudem ist die erste Zacke 15a mit seinem Zackenkopf der Aufnahmeöffnung 16 zugeneigt, wie in Fig. 4a an der ungleichmäßigen Verteilung zu erkennen.

Außerdem bildet der vorspringende Blechabschnitt 14 an seinem Kopfende 14c eine zweite Zacke 17 aus. Damit kann der Rahmenschenkel 12a zwischen den ersten und dem zweiten Zacken 15a und/oder 15b und 17 verklemmt werden, was diesen standfest in der Aufnahme 10a hält.

Dies ist beispielsweise in Fig. 4a zu erkennen. Die zweite Zacke 15b drückt sich in den Rahmenschenkel 12a ein und verkrallt sich über die damit erzeugte Vertiefung 19 im Rahmenschenkel 12a. Es ist aber zudem vorstellbar, dass sich alternativ oder zusätzlich auch die erste Zacke 15a in den Rahmenschenkel 12a eindrückt und sich über die damit erzeugte Vertiefung im Rahmenschenkel 12a verkrallt, was nicht dargestellt ist.

Aufgrund der voneinander unterschiedlichen ersten und zweiten Zacken 15a, 15b können zudem auch verschieden dicke Rahmenschenkel 12a von der Aufnahme verkrallt werden.

Die Zacken 15a, 15b sind -wie dargestellt- nicht parallel ausgerichtet, sondern zueinander geneigt - was die vielseitige Verwendbarkeit des Stützelements 4 zum Aufnehmen verschiedenste Solarelemente 2, 3 erhöht.

Das Verklemmen in den Aufnahme 10a bis 10d kann bei der Montage Solarelementen 2, 3 dadurch erleichtert werden, weil der im Wesentlichen quer zum Steg 7 verlaufende Blechrand 7a in der Aufnahme 10a mit einem Neigungswinkel α, im Bereich von 5 bis 15 Grad, nämlich 10 Grad, verläuft.

So ist in Fig. 1 am strichliert dargestellten Solarelementen 3 der erste Montageschritt zu erkennen. Das Solarelementen 3 wird im Wesentlichen horizontal in die Aufnahme eingeführt und dann mit einem Absenken des gegenüberliegenden Endes auf einen Neigungswinkel von 10 Grad, wie am Solarelement 2 bereits zu erkennen, in der Aufnahmen 10c, 10d des Stützelements 4 verklemmt.

Zudem weist der Blechabschnitt 14 jeweils einen ersten in Längsrichtung L des betreffenden Stegs 7 verlaufenden Teilabschnitt 14a und einen daran anschließenden zweiten Teilabschnitt 14b auf. Der zweite Teilabschnitt 14b ist zum Blechrand 7a hingeneigt verlaufend, was das Verklemmen mit der zweiten Zacke 17 vorteilhaft unterstützt. Alle Teilabschnitte verlaufen, abgesehen von deren Anschluss-Rundungen, im Wesentlichen gerade. Damit ergibt sich, dass die Aufnahme 10a sich jeweils von deren Aufnahmeöffnung 16 zu deren Aufnahmeanschlag 18 in der Aufnahmeweite abschnittsweise kontinuierlich erweitert.

Wie in den Figuren 2 und 3 zu erkennen, besteht das Stützelement 4 aus einem U-förmigen Blechprofil. Von den zwei Profilschenkeln bildet einer den ersten Steg 7 und der andere den zweiten Steg 8 aus. Der Profilboden des U-Profils bilden den Fuß 5 aus. Die beiden Stege 7, 8 springen dem Fuß 5 in der Höhe H des Stützelements 4 vor.

Der erste und zweite Steg 7, 8 mit den Blechrändern 7a, 8a sind gleich ausgebildet. Damit bildet der zweite Steg 8 auch eine zweite Aufnahme 10b aus, die identisch zur ersten Aufnahme 10a ist. Die erste und zweite Aufnahme 10a, 10b am ersten und am zweiten Steg 7, 8 sind in die gleiche Richtung ausgerichtet und nehmen beide den Rahmenschenkel 12a des ersten Solarelements 2 auf. Dies teilt die Last auf zwei Stege 7 und 8 auf, was das Stützelement 4 besonders standfest macht.

Zudem bildet der erste Steg 7 eine dritte Aufnahme 10c und der zweite Steg 8 eine vierte Aufnahme 10d aus. Diese dritte Aufnahme 10c ist mit der ersten Aufnahme 10a am ersten Steg 7 angeordnet und zu dieser in entgegengesetzte Richtung ausgerichtet. Die vierte Aufnahme 10d ist mit der zweiten Aufnahme 10b am zweiten Steg 8 angeordnet und zu dieser in entgegengesetzte Richtung ausgerichtet. Die dritte und vierte Aufnahme 10c, 10d sind spiegelsymmetrisch zur ersten Aufnahme 10a ausgebildet. Damit sind diese dritte und vierte Aufnahme 10c, 10d zur Aufnahme des Rahmenschenkels 12b eines anderen zweiten Solarelements 3 ausgebildet.

Des Weiteren sind alle Aufnahmen 10a bis 10d vom Fuß 5 aus gesehen auf gleicher Höhe zueinander angeordnet - was die Montage von Solarelementen 2, 3 erleichtert.

Indem eine an den freien Enden 7a, 8a, die dem Fuß 5 gegenüberliegen, der beiden Stege 7, 8 jeweils mittig vorgesehene im Querschnitt umgekehrt T-förmige Aussparung die Aufnahmen 10a bis 10d des betreffenden Stegs 7, 8 ausbildet, kann sich die Herstellung des Stützelements 4 besonders vereinfachen.

Das Stützelement 4 ist am höher liegenden Ende der Solarelemente 2, 3 angeordnet. Am tieferliegenden Ende der Solarelemente 2, 3 finden sich noch ein Auflagekeil 20 aus einem Blechprofil, beispielsweise Stahlprofil, welcher mittig am Solarelement 2, 3 angeordnet ist - wie in Fig. 5 dargestellt - und dort die Solarelemente 2, 3 abstützt.

An den Ecken werden die Solarelemente 2, 3 von einem Halteelement 21 getragen und gehalten, wie in Fig. 5 zu erkennen. Das Halteelement 21 kann beispielsweise entsprechend der EP3828479A1 ausgebildet sein.

## Patentansprüche

1. Stützelement aus Metall für mindestens ein Solarelement (2, 3), insbesondere Solarmodul und/oder Solarkollektor, mit einem, eine Aufstandsfläche für das Stützelement ausbildenden Fuß (5), mit zumindest einem vom Fuß (5) in der Höhe (H) des Stützelements (4) vorspringenden Steg (7, 8) zum Abstützen des Solarelements (2, 3), **dadurch gekennzeichnet, dass** das Stützelement (4) aus einem Blechprofil, insbesondere Stahlblechprofil, besteht, dessen Profilboden den Fuß (5) und dessen Profilschenkel den Steg (7, 8) ausbildet, welcher Steg (7, 8) an seinem freien, dem Fuß (5) gegenüberliegenden Ende (9) mindestens eine Aufnahme (10a, 10b, 10c, 10d) durch eine in das Blech eingebrachte Aussparung aufweist, wobei diese Aufnahme (10a, 10b, 10c, 10d) zur Aufnahme eines Rahmenschenkels (12a, 12b) des Solarelements (2, 3) ausgeformt ist.

2. Stützelement nach Anspruch 1, **dadurch gekennzeichnet, dass** ein, insbesondere L-förmiger, Blechabschnitt (14) des Stegs (7, 8) von einem Blechrand (7a, 8a) am freien Ende (9) des Stegs (7, 8) vorspringt und gemeinsam mit diesem Blechrand (7a, 8a) die Aufnahme (10a, 10b, 10c, 10d) ausbildet.

3. Stützelement nach Anspruch 1 oder 2, **dadurch gekennzeichnet, dass** der Blechrand (7a, 8a) innerhalb der Aufnahme (10a, 10b, 10c, 10d) zumindest eine erste vorspringende Zacke (15a, 15b) ausformt.

4. Stützelement nach Anspruch 3, **dadurch gekennzeichnet, dass** zwei erste Zacken (15a, 15b) voneinander unterschiedliche Zackenhöhen (ha, hb) aufweisen und/oder dass jene einer Aufnahmeöffnung (16) der Aufnahme (10a, 10b, 10c, 10d) am nächsten liegende erste Zacke (15a) in der Zackenhöhe (ha) kleiner als die ihr nachfolgende erste Zacke (15b) ist.

5. Stützelement nach einem der Ansprüche 2 bis 4, **dadurch gekennzeichnet, dass** der vorspringende Blechabschnitt (14) an seinem Kopfende (14c) eine zweite Zacke (17) ausbildet.

6. Stützelement nach Anspruch 5, **dadurch gekennzeichnet, dass** die erste und zweite Zacke (15a, 15b, 17) zum Verklemmen des von der Aufnahme (10a, 10b, 10c, 10d) aufgenommenen Rahmenschenkels (12a, 12b) des Solarelements (2, 3) ausgebildet sind.

7. Stützelement nach einem der Ansprüche 1 bis 6, **dadurch gekennzeichnet, dass** der im Wesentlichen quer zur Längsrichtung (L) des Stegs (7, 8) verlaufende Blechrand (7a, 8a) in der und/oder in die Aufnahme (10a, 10b, 10c, 10d) mit einem Neigungswinkel (α), insbesondere im Bereich von 5 bis 15 Grad, verläuft.

8. Stützelement nach einem der Ansprüche 1 bis 7, **dadurch gekennzeichnet, dass** der Blechabschnitt (14) jeweils einen ersten in Längsrichtung (L) des betreffenden Stegs (7, 8) verlaufenden Teilabschnitt (14a) und einen daran anschließenden zweiten Teilabschnitt (14b) aufweist, der einen zum Blechrand (7a, 8a) hin geneigten Verlauf aufweist.

9. Stützelement nach Anspruch 8, **dadurch gekennzeichnet, dass** der erste und/oder zweite Teilabschnitt (14a, 14b) im Wesentlichen gerade verlaufen.

10. Stützelement nach einem der Ansprüche 1 bis 9, **dadurch gekennzeichnet, dass** die Aufnahmen (10a, 10b, 10c, 10d) sich jeweils von ihrer Aufnahmeöffnung (16) zu ihrem Aufnahmeanschlag (18) in der Aufnahmeweite zumindest abschnittsweise, insbesondere kontinuierlich, erweitern.

11. Stützelement nach einem der Ansprüche 1 bis 10, **dadurch gekennzeichnet, dass** das Stützelement (4) aus einem U-förmigen Blechprofil besteht, dessen zwei Profilschenkel den ersten Steg (7) mit der ersten Aufnahme (10a) und den zweiten Steg (8) mit einer zweiten Aufnahme (10b) ausbilden, die beide in die gleiche Richtung zur Aufnahme des Rahmenschenkels (12a, 12b) des ersten Solarelements (2, 3) ausgerichtet sind.

12. Stützelement nach Anspruch 11, **dadurch gekennzeichnet, dass** der erste Steg (7) eine dritte Aufnahme (10c) und der zweite Steg (8) eine vierte Aufnahme (10d) ausbilden, die der am jeweiligen Steg (7, 8) angeordneten anderen Aufnahme (10a, 10b) in entgegengesetzter Richtung ausgerichtet und zur Aufnahme des Rahmenschenkels (12a, 12b) eines zweiten Solarelements (2, 3) ausgebildet sind.

13. Stützelement nach Anspruch 11 oder 12, **dadurch gekennzeichnet, dass** die Aufnahmen (10a, 10b, 10c, 10d) vom Fuß (5) aus gesehen auf gleicher Höhe zueinander angeordnet sind.

14. Stützelement nach Anspruch 11, 12 oder 13, **dadurch gekennzeichnet, dass** eine an den freien Enden (9) der beiden Stege (7, 8) jeweils mittig vorgesehene, im Querschnitt umgekehrt T-förmige Aussparung die Aufnahmen (10a, 10b bzw. 10c, 10d) des betreffenden Stegs (7, 8) ausbildet.

15. Solaranlage (1) oder Anordnung, mit zumindest einem Solarelement (2, 3), insbesondere Solarmodul und/oder Solarkollektor, das einen Rahmen (12) mit einem Rahmenschenkel (12a, 12b) aufweist, und mit einem, insbesondere mittig des Rahmens (12) angeordneten, Stützelement (4) nach einem der Ansprüche 1 bis 14, wobei der Rahmenschenkel (12a, 12b) in zumindest eine Aufnahme (10a, 10b, 10c, 10d) des Stützelements (4) ragt.
